# EUROPÄISCHE PATENTSCHRIFT

(11) **EP 2 100 500 B1**
(45) Veröffentlichungstag und Bekanntmachung des Hinweises auf die Patenterteilung: **03.10.2012**
(21) Anmeldenummer: 09155174.7
(22) Anmeldetag: 13.03.2009
(51) Int. Cl.: A01G 9/24

(54) **Verfahren und Vorrichtung zum Schützen von Pflanzen vor Frost**
Method and device for protecting plants from frost
Procédé et dispositif de protection des plantes contre le gel

(30) Priorität: 14.03.2008 DE 102008014313; 25.04.2008 DE 102008020784
(43) Veröffentlichungstag der Anmeldung: 16.09.2009
(73) Patentinhaber: Roeck, Jürgen, 68307 Mannheim-Blumenau (DE)
(72) Erfinder: Roeck, Jürgen, 68307 Mannheim-Blumenau (DE)
(74) Vertreter: Benedum, Ulrich Max

(56) Entgegenhaltungen:
- WO-A-98/38849
- WO-A-2007/105168
- DE-U1-202006 003 876
- JP-A- 1 179 632
- US-A- 4 856 227

## Beschreibung

### GEBIET DER ERFINDUNG

Die Erfindung betrifft ein Verfahren zur Kontrolle der Temperatur in einer geschützten Umgebung, insbesondere in einem Gewächshaus.

### STAND DER TECHNIK

Das energetisch günstige Beheizen und Kühlen von Gewächshäusern ist ein weites Gebiet im Stand der Technik. Die DE 10 2004 001 139 A1 beschreibt beispielsweise ein Verfahren zum Beheizen von Treibhäusern mittels eines Wärmespeichers, welcher die Abwärme aus dem Kompostieren von Agrarabfällen nutzt. Wegen der doch begrenzten Leistungsfähigkeit dieser Anlage benötigt das Gewächshaus aber ein Doppeldach und eine besonders starke Wärmeisolierung, um auch bei strengem Frost frostfrei zu bleiben.

Daneben gibt es Verfahren zur Bewässerung von Pflanzen in Gewächshäusern, welche auch die Gewächshaustemperatur regeln. Die russische Patentschrift RU 2 112 354 C1 offenbart eine Anlage zum Bewässern und Beheizen von Gewächshäusern, umfassend unter anderem einen Wassertank, eine Pumpe, Heizrohre und ein Bewässerungssystem. Damit wird den Gewächshauspflanzen gezielt vorgewärmtes Wasser zugeführt. Das Bewässerungssystem umfasst entsprechend öl- oder gasbefeuerte Heizkessel, einerseits zur Regulierung der Wassertemperatur, anderseits um das Zufrieren der Leitungen im Winter zu vermeiden.

Weiterhin kennt der Stand der Technik eine Vielzahl von Heizverfahren, welche sich der Abwärme von Kraftwerken oder geothermischer Anlagen bedienen; siehe DD 222 447 A1. Hierbei kommen mehr oder minder groß dimensionierte Wärmetauscher und Wärmepumpen zum Einsatz. Heute gebräuchliche Kompressions-Wärmepumpen erreichen eine Energiebilanz von 1:4 bis 1:5. Die Energiebilanz ergibt sich aus der Aufrechnung der benötigten Energie für die Wärmepumpe gegen die Energie, die zur Gewächshausheizung nötig wäre.

Schließlich gibt es auch unzählige Verfahren zum direkten Beheizen von Gewächshäusern. Unter der Vielzahl an Heizsystemen für Gewächshäuser seien hier vor allem die Veröffentlichungen JP 2002-330640 und JP 1-179632 erwähnt. Weiter sind in EP 0 026 296 A1 und US 4,195,441 Verfahren zum Beheizen von Gewächshäusern offenbart, in denen Wasser bekannter Temperatur bereitgestellt wird. Das Wasser wird dann zum Wärmetausch und zur Beregnung von Pflanzen verwandt, um hinreichende klimatische Bedingungen für ein Pflanzenwachstum im Gewächshaus zu schaffen.

US-A-4 856 227 und WO-A-2007/105168 beschreiben jeweils ein Gewächshaus, welches über eine Pumpen- und Sprinkleranlage, Temperaturfühler und ein Leitungssystem zur die Bewässerung der Pflanzen verfügt. Weiterer Stand der Technik zu Gewächshäusern ist enthalten in DE-U-20 2006 003 876 und WO-A-98/38849.

Nachteilig an den bisherigen Systemen ist, dass sie entweder einen hohen Investitionsbedarf haben (Wärmetauscher, Rohrsysteme, Solaranlagen usw.), oder dass man weiter hinzuheizen muss, was bei dem sich entwickelnden Energiepreis immer teurer wird. Zudem schaffen die bisherigen Verfahren im Gewächshaus klimatische Bedingungen, welche eine Vermehrung von Schädlingen, insbesondere Pilzen, begünstigen. Der Stand der Technik stellt sich als Problem dar.

### ZUSAMMENFASSUNG DER ERFINDUNG

Das Problem wird gelöst durch das Verfahren nach Anspruch 1. Weitere Vorteile und Ausführungsformen der Erfindung sind den Unteransprüchen 2 bis 10 und Anspruch 11 zu entnehmen.

Das erfindungsgemäße Verfahren eignet sich für die Temperaturregelung in einem Gewächshaus zum Anbauen, Kultivieren und Züchten frostempfindlicher Pflanzen in gemäßigten Breiten, wo nachts und an vereinzelten Tagen Außentemperaturen von minus 20 Grad Celsius auftreten können und wo über mehrere Monate im Jahr die Gefahr von Bodenfrost besteht. Das erfindungsgemäße Verfahren umfasst ein Bereitstellen eines Brunnens zum Heben von Grundwasser bekannter Temperatur aus der neutralen Tiefenzone; das Messen einer allgemeinen Luft- und Bodentemperatur im Gewächshaus und der Außentemperatur mittels Temperaturfühler, das Verregnen von Grundwasser aus der neutralen Tiefenzone über einer Fläche in dem Gewächshaus, sobald die Außentemperatur unter einen vorgegebenen Wert fällt; das Regulieren der Menge an verregnetem Grundwasser aus der neutralen Tiefenzone entsprechend der allgemeinen Luft- und Bodentemperatur im Gewächshaus damit die im Gewächshaus kultivierten Pflanzen keine Frostschäden erleiden; sowie die Drainage des verregneten Grundwassers, und das Versickern lassen oder Rückführen des zur Temperaturregelung genutzten Grundwassers in den Boden.

Eine bevorzugte Ausführungsform des Verfahrens umfasst das Verregnen von Grundwasser aus der neutralen Tiefenzone über einer Freifläche, wenn die Außentemperatur unter einen vorgegebenen Bereich fällt, oder die allgemeine Temperatur im Gewächshaus einen vorgegebenen Wert unterschreitet, oder beides zugleich. Hierzu wird bevorzugt die allgemeine Gewächshaustemperatur aus den Werten mehrerer Temperaturmesspunkte ermittelt. Das Flächenverhältnis von Beregnungsfläche zu Kulturfläche beträgt für eine wirksame Temperaturregelung 1 zu 2 bis 10, bevorzugt 1 zu 2 bis 6, besonders bevorzugt 1 zu 4.

In einer besonders bevorzugten Ausführungsform wird die Menge an aus der neutralen Tiefenzone gefördertem und verregnetem Grundwasser automatisch über die Außentemperatur und die allgemeine Gewächstemperatur berechnet und geregelt. Das aus der Tiefenzone geförderte Grundwasser wird bevorzugt über eine im Gewächshaus bestehende Sprinkleranlage verregnet. Nachdem nahezu alle modernen Gewächshäuser über ein Rohrsystem beziehungsweise über eine Beregungsanlage verfügen, verlangt das erfindungsgemäße Verfahren vergleichsweise wenige Zusatzinvestitionen. Das Verregnen erfolgt bevorzugt über eine Sprinkleranlage mit feinen Düsen.

Das erfindungsgemäße Verfahren eignet sich gut für den Anbau von frostempfindlichen, nässeliebenden Pflanzen, insbesondere von Blumen. Gut geeignet ist es für die Anzucht von Schwertliliengewächsen (Iridaceae), Liliengewächsen (Liliidae), insbesondere Freesien, Spargelgewächsen (Asparagales), Hahnenfußgewächsen (Ranunculaceae), insbesondere Ranunkeln, Anemonen, Anemonen-Schmuckblume (Callianthemum anemonoides) und Windröschen, Megaleranthis, Trollblumen (Trollius), Eranthis, Adonisröschen (Adonis), Eisenhut (Aconitum), Feldrittersporne (Consolida), Rittersporne (Delphinium), Christrose oder Nieswurz (Helleborus), Akelei (Aquilegia). Es sollte sich eignen für Gemüse und Salat, insbesondere Feldsalat.

Es wird zur Erläuterung des Verfahrens zudem beschrieben eine Vorrichtung zur Vermeidung von Frosttemperaturen in einem Gewächshaus für gemäßigte Breiten, umfassend mindestens eine Pumpenanlage zum Heben von Grundwasser aus der neutralen Tiefenzone an die Oberfläche; Temperaturfühler (8, 10) zum Messen der Außentemperatur und einer allgemeinen Luft- und Bodentemperatur im Gewächshaus, welche Signale an eine Steuereinheit zur Steuerung der Pumpenanlage senden; ein Leitungssystem und eine Sprinkleranlage zum Verregnen von Grundwasser aus der neutralen Tiefenzone über einer Fläche in dem Gewächshaus; sowie Mittel zum automatischen Verändern der Förderleistung der Pumpenanlage entsprechend den Signalen der Temperaturfühler.

Unteraspekte der Erfindung betreffen Verfahren mit den Schritten: Bereitstellen einer Bewässerungsanlage und Versorgung derselben mit Grundwasser; Messen der Temperatur außerhalb der geschützten Umgebung, zum Beispiel des Gewächshauses, und der Temperatur und Luftfeuchtigkeit innerhalb der geschützten Umgebung; Verregnung von Wasser über einer begrenzten Freifläche, die sich zwischen Anbauflächen innerhalb der geschützten Umgebung befindet; und Versickern lassen des Wassers im Boden.

Dadurch, dass Grundwasser verregnet wird, kann die Temperatur in der geschützten Umgebung leicht frostfrei gehalten werden; und es wird auch zugleich die Luftfeuchtigkeit reguliert. Vorzugsweise wird die Verregnung so gesteuert, dass sie nur stattfindet, wenn die Außentemperatur einen vorbestimmten erlaubten Bereich verlässt. Der erlaubte Temperaturbereich kann zwischen 0 und 15 Grad Celsius liegen, bevorzugt 3 bis 10 Grad Celsius. Die Verregnung kann auch von der Temperatur und/oder der Luftfeuchtigkeit in der geschützten Umgebung abhängig gemacht werden. Wenn also die Innentemperatur unter einen Wert von beispielsweise 5 Grad Celsius fällt, wird das Verregnen von in der Regel 10 bis 15 Grad Celsius warmen Grundwasser aus der neutralen Tiefenzone dazu beitragen, dass die Temperatur im Gewächshaus frostfrei bleibt.

Die Verregnung des Grundwassers wird bevorzugt so gesteuert, dass Temperatur und Luftfeuchtigkeit im Gewächshaus sich innerhalb vorgegebener Bereiche bewegen. Erfindungsgemäß ist das zur Verregnung verwendete Wasser Grundwasser, das vor Ort aus der neutralen Tiefenzone gefördert wird. Durch das Verregnen und Versickern wird das Grundwasser wieder dem Boden zugeführt. Es muss somit keine Energie zum Heizen des Gewächshauses aufgebracht werden, sondern nur zur Förderung des Grundwassers.

Dies ist insbesondere bei Frost von Bedeutung. Durch das Verregnen von (im Verhältnis zur Außentemperatur) warmem Grundwasser im Inneren des Gewächshauses erhöhen sich sowohl Temperatur als auch die Luftfeuchte. Bei kühlen oder frostigen Außentemperaturen schlägt sich an den Innenscheiben des Gewächshauses Kondenswasser ab und an besonders kalten Oberflächen bildet sich eine Reifschicht. Eine so gebildete dicke Reifschicht an den Innenscheiben des Gewächshauses bewirkt eine verbesserte thermische Isolierung des Gewächshauses. Versuche haben gezeigt, dass das Gewächshaus auch bei ständigen Außentemperaturen von unter minus 15 Grad Celsius, kurzzeitig auch bei minus 20 Grad Celsius, allein durch Verregnen von Grundwasser aus der neutralen Tiefenzone frostfrei gehalten werden kann. Durch die so einsetzende verbesserte thermische Isolierung des Gewächshauses bei Frostgraden entfällt auch die Notwendigkeit einer kostspieligen Doppelbedachung oder anderer zusätzlicher Isolationsmaßnahmen.

Durch die Zuführung von Wärme durch Grundwasserverregnung lassen sich im Gewächshaus ohne komplizierte technische Einrichtungen relativ konstante Temperaturen erzielen, zumal die technischen Investitionen bereits in den meisten Gewächshäusern für andere Zwecke vorhanden sind. Kostenträchtige Heiz- und Wärmetauschersysteme wie Kompressions-Wärmepumpen, Solaranlagen oder besondere Wärmeaustauscher sind nicht erforderlich.

Das erfindungsgemäße Verfahren erlaubt aufs Jahr eine etwa zehnfache Nutzung der eingesetzten Energie. Die sogenannte Energiebilanz von 1:10 ergibt sich aus dem Verhältnis der benötigten Energie für die Wasserförderung gegenüber der eingesparten Energie zur Gewächshausheizung. Damit ist eine Vorrichtung, die sich dieses Verfahren zunutze macht weitaus effizienter als handelsübliche Wärmepumpen, die nur eine Energiebilanz von 1:4 bis 1:5 besitzen.

Die Effizienz kann noch erhöht werden, wenn man zum Verregnen des Grundwassers eine Sprinkleranlage mit feiner verregnenden Düsen verwendet. Bei hohen Außentemperaturen führt eine feine Zerstäubung dazu, dass das Wasser schon beim Austreten in Wasserdampf übergeht beziehungsweise schneller verdunstet, was zu einer Abkühlung der Umgebung führt. Bei niederen Temperaturen hingegen wird nach dem Austritt mehr Kondensationswärme frei. Feinere Düsen verlangen aber einen höheren Wasserdruck und eine höhere Pumpleistung, so dass die Düsen nicht beliebig klein werden dürften.

In einer Ausführungsform der Erfindung wird die Gesamtfläche in der geschützten Umgebung so aufgeteilt, dass pro 4 Einheiten Anbaufläche 1 Einheit Freifläche zur Verregnung gegenüber steht. Je nach Bedarf können auch andere Verhältnisse gewählt werden. Die Freifläche dient dazu, das verregnete Wasser aufzufangen und durch Versickerung dem Erdreich wieder zuzuführen.

In einer weiteren Ausführungsform der Erfindung erfolgt ein regelmäßiger Wechsel der Beregnungsflächen. Dieser Wechsel kann insbesondere in jährlichen Abständen vorgenommen werden oder bei einem Kulturwechsel. Vorteilhaft dabei ist, dass natürlich im Wasser vorkommende Nährstoffe auf der Freifläche ausgefällt werden, und sich hier anreichern können. Je nach Qualität des verregneten Grundwassers kann dadurch eine künstliche Düngung des Bodens mit Spurenelementen wie Eisen, Mangan, Kupfer usw. entfallen. Durch den Wechsel der Anbau- und Freiflächen wird die Bodengare verbessert und mit Nährstoffen angereichert. Gleichzeitig kann durch das Ausfällen Grundwasser belastender Salze und deren Zuführung in die Pflanzenernährung die Grundwasserqualität verbessert werden. Dazu muss allerdings sichergestellt werden, dass die verwendeten Beregnungsflächen vor Inbetriebnahme frei von leicht löslichen Salzen sind, um einen Austrag dieser Salze ins Grundwasser zu vermeiden.

Weiterhin enthält Grundwasser regelmäßig mehr als üblich Hydrogencarbonat. Bei der Verregnung von Grundwasser wird somit partiell Kohlendioxid frei, so dass eine Kohlendioxid-Düngung der Kultur in besonderem Maß gewährleistet ist.

Das Verregnen erhöht die Feuchtigkeit in einem kühlen Gewächshaus so stark, dass sich quasi überall Kondenswasser niederschlägt und auf die Kulturen niedertropft. Durch dieses Kondenswasser werden die Pflanzen auf den Kulturflächen im Inneren des Gewächshauses ständig so benetzt, dass überraschenderweise Grauschimmel und die in Gewächshäusern chronisch auftretenden Pilzkrankheiten auf ökologische Art, ohne den Einsatz von Pflanzenschutzmitteln, einfach abgewaschen werden und gar nicht erst entstehen.

Das hier beschriebene Verfahren ist vor allem anwendbar, wenn auf den Anbauflächen Schnittblumen wie Freesien, Anemonen oder Ranunkeln oder Feldsalat, angebaut wird. Der Anbau weiterer Pflanzen ist denkbar.

Das hier beschriebene preiswerte und effiziente Verfahren ermöglicht also gleichzeitig die Kontrolle der Luftfeuchtigkeit und Temperatur in einer geschützten Umgebung, ohne dass zusätzliche Heizenergie in das System eingeführt werden muss. Weiter wird der Bedarf an zusätzlicher thermischer Isolation für die geschützte Umgebung reduziert.

Die Vorrichtung zur Ausführung des erfindungsgemäßen Verfahrens, umfasst eine Pumpe, die Grundwasser an die Erdoberfläche fördert; einen Fühler zur Messung der Temperatur außerhalb der geschützten Umgebung; einen Fühler zur Messung von Temperatur und Luftfeuchtigkeit innerhalb der geschützten Umgebung; eine Bewässerungsanlage zur Verregnung des Grundwassers über Freiflächen, die sich zwischen Anbauflächen innerhalb der geschützten Umgebung befinden; eine Kontrolleinheit zum Ein- und Ausschalten der Pumpe und der Bewässerungsanlage; ein Leitungssystem zur Versorgung der Bewässerungsanlage mit Grundwasser. Die Bewässerungsanlage kann eine übliche Sprinkleranlage sein. Ebenfalls Teil der Erfindung ist die Verwendung der vorgenannten Vorrichtung innerhalb eines Gewächshauses zum Anbau von Schnittblumen oder Gemüse.

Es werden nun weitere Vorteile sowie Ausführungsformen an Beispielen mit Bezug auf die anliegenden Abbildungen beschrieben.

### KURZE BESCHREIBUNG DER ABBILDUNGEN

Es zeigt:
Fig. 1 eine schematische Zeichnung einer erfindungsgemäßen Verregung von Grundwasser aus der neutralen Tiefenzone in einem Venlo-Glasgewächshaus zur Vermeidung von Frostschäden an Pflanzen;
Fig. 2A-E Kurvendiagramme des jahreszeitlichen Verlaufs der Grundwassertemperatur an topographisch verschiedenen Messstellen in Abhängigkeit von der Tiefe.

### EINGEHENDE BESCHREIBUNG DER ERFINDUNG

Je nach topographischen Gegebenheiten besitzt ab einer gewissen Tiefe das Grundwasser nahezu stets die gleiche Temperatur. Die Eindringtiefe der jahreszeitlichen Temperaturschwankungen hängt ab von geogenen Faktoren wie Flurabstand, Wärmeleitfähigkeit der Gesteine, Grundwasserneubildung und von anthropogenen Faktoren. Nachstehend wird als neutrale Zone die Tiefenlage des Grundwassers bezeichnet, wo die Wassertemperatur im Wesentlichen nicht mehr schwankt. Im Raum Berlin-Brandenburg liegt die neutrale Zone in einer Tiefe von 15 bis 25 m (Henning, A. & Limberg A., Das Grundwasser-Temperaturfeld von Berlin. Brandenburgische Geowiss. Beitr., 2, 1, S. 97-104, Kleinmachnow).

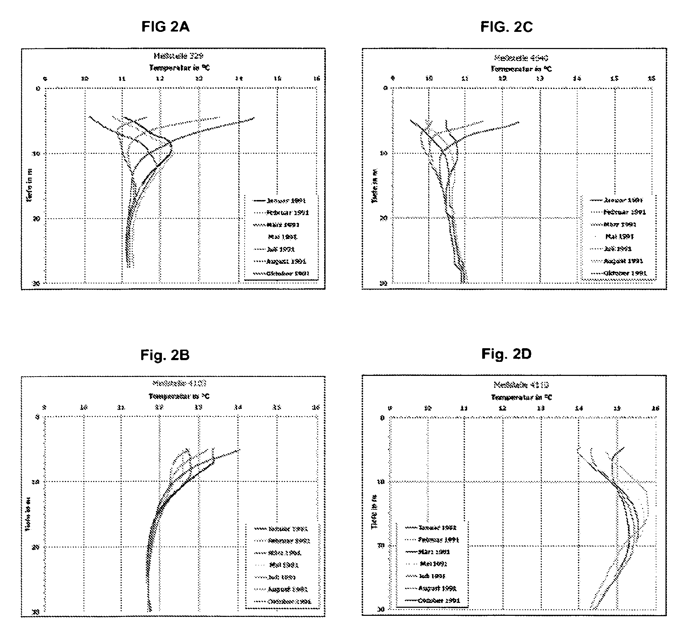

Figuren 2A-D zeigen die jahreszeitlichen Temperaturschwankungen des Grundwassers an vier Grundwassermessstellen ähnlicher geologischer Lage (Wechsel von Fein- und Mittelsanden in den ersten zehn Bodenmetern) aber mit unterschiedlicher Besiedlungsstruktur, sowie die jahreszeitliche Veränderung des Temperaturverlaufs in den ersten 30 Metern unter der Geländeoberkante. Die festgestellten Temperaturen und der Temperaturverlauf sind abhängig vom Standort der Grundwassermessstelle. Die niedrigsten Grundwassertemperaturen an der Grundwasseroberfläche treten in der Regel im Frühjahr auf (Februar bis Mai), die höchsten im Spätsommer (September bis Oktober), wobei es aber Ausnahmen gibt. Zum Beispiel lagen an einer Messstelle (4110) die höchsten Grundwassertemperaturen im Winter (Januar), die niedrigsten im Sommer (Juli) vor, was sich dadurch erklärt, dass diese Messstelle mitten in einer dichten Industrie-ansiedlung mit mehreren großen Abwärmeproduzenten in unmittelbarer Nähe zu einem Oberflächengewässer lag. Über das ganze Jahr ist aber eine Temperaturanomalie mit jahreszeitlichen Temperaturschwankungen von nur ca. 1 °C zu beobachten. Auch die Form des Temperaturverlaufs der Messstellen 329 und 4103 unterhalb der neutralen Zone weisen auf instationäre Temperaturverhältnisse hin. Dies bedeutet, dass langfristig aufgrund anthropogener Aktivitäten mit einer Erhöhung der Grundwassertemperaturen zu rechnen ist.

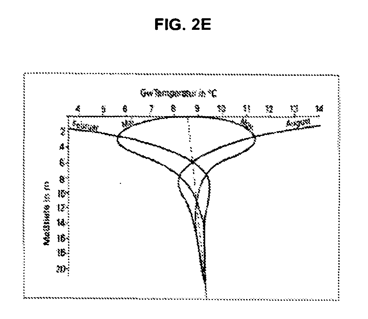

Fig. 2E zeigt ein jahreszeitliches Grundwassertemperatur-Tiefenprofil von knapp 100 ausgewählten Messstellen in Bayern. Die Messungen der Grundwassertemperatur erfolgten an definierten Tiefenmesspunkten, und zwar an jeder Messstelle vom Wasserspiegel bis zur Sohle beziehungsweise bis zur Unterkante der eingebauten Filterrohre und zwar auf Grundlage einer Richtlinie der Länderarbeitsgemeinschaft Wasser.

In der Tabelle 1 sind zusammengefasst ausgewählte Temperaturkennwerte für unterschiedliche Besiedlungsbereiche gegenübergestellt. Der Flurabstand betrug jeweils 5 Meter.

| **Messstelle Besiedlungsstruktur** | **Tiefsttemperatur [°C]** | **Höchsttemperatur [°C]** | **Temperatur neutrale Zone [°C]** | **Tiefe der neutralen Zone [m]** |
|---|---|---|---|---|
| Messstelle 4640 Überwiegend Vegetation | 9 | 13 | 10 | 20 |
| Messstelle 329 Mittlere Siedlungsdichte | 10 | 14 | 11 | 20 |
| Messstelle 4103 Hohe Siedlungsdichte | 12 | 14 | 12 | 20 |
| Messstelle 4110 Industrie-Ansiedlung | 13 | 15 | 14 | 35 |

Tabelle 1 ist zu entnehmen, dass mit der Besiedlungsdichte die Grundwassertemperatur ansteigt. In Waldgebieten liegen in Deutschland die Tiefsttemperaturen in der neutralen Zone aber immer noch bei über neun Grad Celsius, während in urbanen Räumen das Grundwasser zumeist mehr als 2 Grad wärmer ist.

Die Werte zeigen, dass in Mitteleuropa die Grundwassertemperatur bei etwa 10 Grad Celsius liegt. Im dichtbesiedelten Rheintal liegen nach eigener Messung in der neutralen Tiefenzone die Grundwassertemperaturen bei bis zu 14 Grad Celsius. Nachdem Unterglas-Gartenbau in der Regel in urbanen Räumen und Siedlungsgebieten erfolgt, und zudem sehr viele Gartenbaubetriebe eigene Brunnenanlagen besitzen, kann die Wärme des Grundwassers aus der neutralen Tiefenzone ohne Weiteres durch die erfindungsgemäße Sprühverregung genutzt werden,

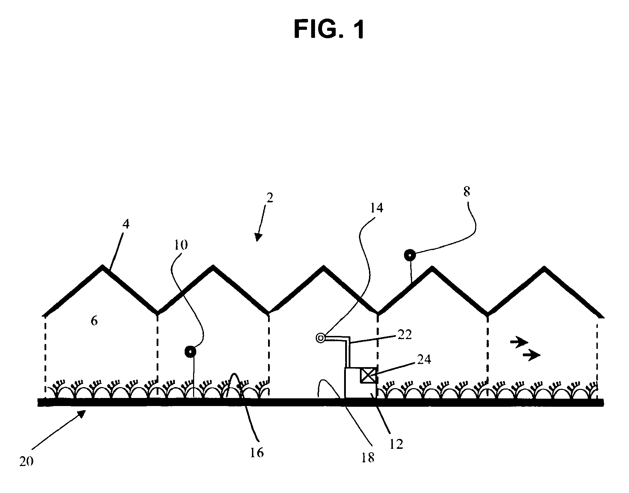

Fig. 1 zeigt ein Gewächshaus mit einer Anlage zur erfindungsgemäßen Sprühverregnung von Grundwasser aus der neutralen Tiefenzone, sobald die Außentemperaturen Minusgrade erreichen. Ein Fühler 8 mißt die Temperatur im Außenbereich 2 und ein anderer Fühler 10 mißt Temperatur und Luftfeuchtigkeit im Innenbereich 6 eines Gewächshauses 4 mit Kulturflächen 16 und Freiflächen 18. Das Verhältnis von Kulturflächen zu Freiflächen beträgt 4:1. Die Fühler 8 und 10 sind über eine Steuereinheit 24 mit einer Pumpe 12 verbunden, die Grundwasser aus dem Boden 20 fördert und in ein Leitungssystem 22 einspeisen. Die Bewässerungsanlage 14 verregnet das geförderte Grundwasser über den Freiflächen 18, wo es wieder im Boden 20 versickert. Die Steuereinheit 24 kann, je nach Bedarf, so eingestellt werden, dass die Pumpe 12 nur bei bestimmten Meßwerten von Fühler 8 und/oder Fühler 10 anspringt.

### BEISPIEL

### Anzucht und Kultivierung von frostempfindlichen Freesien unter Glas im Raum Mannheim

Es wurden regelmäßig Freesien in mehreren nebeneinander liegenden offenen Venlo-Gewächshäusern (Gewächshäuser in Stahl-Glas-Bauweise als Venlo-Blöcke, Breite jeweils 4,6 m) jeweils in den Wintermonaten von 2005 bis 2008 gezüchtet. Die Gewächshäuser lagen im Rheintal (Raum Mannheim), wo das Grundwasser in der neutralen Tiefenzone (ab 7,5 m) das ganze Jahr über eine Temperatur von 12 Grad Celsius besitzt. In diesem Zeitraum waren in einigen Winternächten Fröste von bis zu minus 15 Grad zu überstehen. Es erfolgte keine Zuheizung. Die Freesien wurden auf gewachsenem Boden gehalten. Durch die temperaturstabilisierende Grundwasserverregnung auf einem Fünftel der Gewächshausfläche waren die Pflanzen vor Frost geschützt.

Durch dieses Vorgehen konnte eine Energieeinsparung von ca. 15 L Heizöl pro Quadratmeter Anbaufläche und Jahr erzielt werden. Dies entspricht einer Einsparung von ca. 150 kWh Heizenergie pro Quadratmeter, wobei die notwendige Energie für die Grundwasserförderung nur 15 kWh betrug. Dies entspricht einer zehnfachen Nutzung der eingesetzten Energie bzw. einer Energiebilanz von ca. 1:10.

Durch die ständige Benetzung der Pflanzen mit Kondenswasser wurde auch der Einsatz von Fungiziden und Pestiziden überflüssig. Pilze der Gattung Botrytis sind bedeutende Phytopathogene, die hohen Schaden an vielen wichtigen Schnittblumen und anderen Agrarerzeugnissen verursachen. Sie werden häufig chemisch, zum Beispiel mit Fenbutatinoxid, Pyrimethanil, Fludioxonil, Cyprodinil oder Fenhexamid bekämpft. Überraschend war zu beobachten, dass aber keine Grauschimmelfäule mehr auftrat. Es wird vermutet, dass Sporen und Schädlinge durch die hohe Luftfeuchtigkeit und die erfindungsgemäß erzielte ständige Benetzung der Pflanzen einfach ausverdünnt und abgewaschen werden

Auch für die menschliche Gesundheit stellt Botrytis vor allem durch sein hohes allergenes Potential eine Gefährdung dar. Die Gattung zählt zu den bedeutendsten Allergenen unter den Schimmelpilzen. Im Einzelnen waren folgende Verbesserungen gegenüber dem Mittel der Vorjahre zu beobachten:

**TABELLE 1**

| **Pflanzenteil (Freesien)** | **Krankheit** | **Befallstärke** |
|---|---|---|
| Blüte | Grauschimmelfäule (Botrytis cinerea) | Reduktion 90% |
| Blatt | Grauschimmelfäule (Botrytis) | Reduktion 100% |
| Blatt | Fusarium | Reduktion 100% |
| **Tierische Schädlinge** | Läuse | Reduktion 90% |
| | Tripse | Reduktion 100% |
| | Spinnmilben | Reduktion 100% |

Bei den anderen Pilzerregern, die über das Blatt eindringen, wie echter und falscher Mehltau sowie Blattfleckenpilze, sind ähnliche Ergebnisse zu erwarten. Letztere Krankheiten bekommen Freesien aber nicht. Dies bedeutet, dass im Schnitt beim Pflanzenschutz eine über 90-prozentige Verbesserung erhalten wurde.

Weiterhin führte die Grundwasserverregnung zu einem besseren Wachstum. Das Grundwasser im Raum Mannheim ist carbonathaltig und dadurch wurde, ohne zusätzliche Begasung, im Gewächshaus regelmäßig und ständig eine CO₂-Konzentration von 1000-1200 ppm erhalten. Die Grundwasserverregnung erfolgte durchgängig von Oktober bis Ende April. Die Temperatur des Grundwassers aus der Tiefenzone und die natürlichen Lichtgegebenheiten in Mitteleuropa zwischen Oktober bis April stellen ein optimales Licht-Temperatur-Verhältnis für ein gesundes Pflanzenwachstum im Winter dar. Die optimale Wachstumstemperatur bei Schnittblumen beträgt nämlich ca. 20°C. Eine solche Temperatur führt aber im Winter wegen der geringen Menge an natürlichem Licht zu dünnen, weichen Stielen, so dass zur Verbesserung der Pflanzenqualität mit Kunstlicht nachgeholfen werden muss. Dies ist ökologisch und bei den derzeitigen und zukünftigen Energiekosten auch ökonomisch nicht vernünftig.

Eine Temperaturführung von 6-12°C ist bei den mitteleuropäischen Lichtverhältnissen im Winter besser und führt bei Schnittblumen wie Freesien zu gesünderen Pflanzen. Die ständige Verregnung von Grundwasser aus der Tiefenzone in Verbindung mit einer CO₂-Einstellung zwischen 1000.-1200 ppm stellen somit im Winter qualitätsoptimierte Pflanzenwachstumsverhältnisse für Schnittblumen her. Zudem wird durch die Grundwasserverregnung eine bessere Temperaturverteilung im Gewächshaus erreicht. Wird das Gewächshaus nämlich trocken, mit warmer Luft beheizt, sind die Pflanzen anfälliger gegenüber Schädlingen, da die Lufttemperatur in der Regel 6 bis 8 Grad Celsius über der optimalen Temperatur liegt. Bei zeitweiliger Sonneneinstrahlung steigt die Temperatur im Gewächshaus noch weiter über die optimale Wachstumstemperatur an.

Bei Freesien steht ein Stielgewicht von 18 Gramm für Extra-Qualität, und ein Stielgewicht von 25 Gramm für Super-Qualität. Die permanente Grundwasserfeinverregnung im Gewächshaus erlaubte bei Freesien im Zeitraum 2005 bis 2008 ein mittleres Stielgewicht von über 30 Gramm. Es wurde in den Jahren sogar bis zu 39-40 Gramm pro Stiel erreicht. Die produzierte Qualität lag somit weit über konventionell produzierten Schnittblumen. Normalerweise ist auf Versteigerungen für Freesien eine 50er-Bündelung vorgeschrieben, um das übliche Bündelgewicht zu gewährleisten. Für erfindungsgemäß hergestellte Freesien konnten eine Ausnahmegenehmigung und eine 20er-Bündelung auf Blumenversteigerungen erlangt werden.

Insgesamt waren bei Freesien folgende Verbesserungen in Beschaffenheit und Produktion zu beobachten:

**TABELLE II**

| KRITERIUM | VERÄNDERUNG |
|---|---|
| Stielgewicht gegenüber herkömmlicher Produktion | + 20 - 30% |
| Kulturzeit zwischen Kulturanlage und Ernte | + 10 - 20% |
| Stiele pro Quadratmeter während der Kulturdauer | + 20 - 30% |
| Stiele pro Tagesquadratmeter | + 10 - 20% |
| Erntegewicht je Tagesquadratmeter | + 30 - 40%. |

Wie erwähnt konnte die Produktion ohne Zusatzbeleuchtung für die Wintermonate erfolgen. Die oben genannten Werte sind nur erzielbar bei kontinuierlich über 100% Luftfeuchtigkeit und Nebelbindung im Gewächshaus, um einen ständigen warmen Taubelag auf den Pflanzen aufrecht zu erhalten. Bei einer Trockenbeheizung ist dies nicht möglich. Durch die ständige Benetzung der Pflanzen mit Kondenswasser werden Phytopathogene und tierische Schädlinge weiterhin ausverdünnt und abgewaschen.

Weil das verregnete Grundwasser vor Ort versickert werden kann und dem Grundwasser wieder zufließt, wurden auch keine Wasserabgaben (sogenannter Wasserpfennig) fällig, denn das Verfahren erfüllte die Voraussetzungen für eine Befreiung von den Wasserabgaben. Es verbraucht letztlich kein Wasser, sondern es wird eine ökonomisch und ökologisch wertvolle Alternative für eine Gewächshausheizung zur Verfügung gestellt, die der anthropogenen Erwärmung des Grundwassers entgegenwirkt und den Einsatz von Fungiziden und Pestiziden erübrigt.

Die Messung der allgemeinen Luft- und Bodentemperatur im Gewächshaus und außerhalb des Gewächshauses kann selbstverständlich auch manuell und über Erfahrungswerte erfolgen. Da der Gärtner sowieso nahezu jeden Tag im Gewächshaus arbeitet, kann er entsprechend den aktuellen Bedürfnissen, Erfahrungswerten und dem Wetterbericht die Menge an zu verregnendem Grundwasser für die Beheizung des Gewächshauses abschätzen. Die Erfindung ist daher nicht auf automatische Regelungsanlagen beschränkt sondern liegt in einem Verfahren zur feuchten Beheizung von Gewächshauskulturen durch permanente Vernebelung oder Verregnung von Grundwasser aus der Tiefenzone im Winter.

Weitere Ausführungsformen der Erfindungen kann der Fachmann den beiliegenden Ansprüchen entnehmen.

## Patentansprüche

1. Verfahren zur Regelung der Temperatur in einem Gewächshaus zum Anbauen, Kultivieren und Züchten frostempfindlicher Platzen in gemäßigten Breiten, wo nachts und an vereinzelten Tagen Außentemperaturen von minus 20 Grad Celsius auftreten und über mehrere Monate im Jahr die Gefahr von Bodenfrost besteht, umfassend
(i) Bereitstellen eines Brunnens zum Heben von Grundwasser bekannter Temperatur aus der neutralen Tiefenzone;
(ii) Messen einer allgemeinen Luft- und Bodentemperatur im Gewächshaus und der Außentemperatur mittels Temperaturfühler (8, 10);
(iii) Verregnen von Grundwasser aus der neutralen Tiefenzone über einer Fläche in dem Gewächshaus, sobald die Außentemperatur unter einen vorgegeben Wert fällt;
(iv) Regulieren der Menge an verregnetem Grundwasser aus der neutralen Tiefenzone entsprechend der allgemeinen Luft- und Bodentemperatur im Gewächshaus, so dass die im Gewächshaus kultivierten Pflanzen keine Frostschäden erleiden;
(v) Drainage des verregneten Grundwassers, und Versickern lassen oder Rückführen des zur Temperaturregelung genutzten Grundwassers in den Boden.

2. Verfahren nach Anspruch 1, wobei über 100 Prozent Luftfeuchtigkeit und Nebelbildung im Gewächshaus herbeigeführt wird, um eine Benetzung der Pflanzen mit Kondenswasser zu erzielen.

3. Verfahren nach Anspruch 1 oder 2, wobei das Verregnen von Grundwasser aus der neutralen Tiefenzone über einer Freifläche (18) erfolgt, wenn die Außentemperatur unter einen vorgegebenen Bereich fällt, oder die allgemeine Temperatur im Gewächshaus (4) einen vorgegebenen Wert unterschreitet, oder beides zugleich.

4. Verfahren nach einem der Ansprüche 1 bis 3, wobei die allgemeine Gewächshaustemperatur aus den Werten mehrerer Temperaturmesspunkte ermittelt wird.

5. Verfahren nach einem der Ansprüche 1 bis 4, wobei das Flächenverhältnis von Beregnungsfläche (18) zu Kulturfläche (16) 1 zu 2 bis 10 beträgt, bevorzugt 1 zu 2 bis 6, besonders bevorzugt 1 zu 4.

6. Verfahren nach einem der Ansprüche 1 bis 5, wobei die Menge an aus der neutralen Tiefenzone gefördertem und verregnetem Grundwasser automatisch über die Außentemperatur und die allgemeine Gewächshaustemperatur berechnet und geregelt wird.

7. Verfahren nach einem der Ansprüche 1 bis 6, wobei das aus der Tiefenzone geförderte Grundwasser über eine im Gewächshaus (4) bestehende Sprinkleranlage verregnet wird.

8. Verfahren nach Anspruch 7, wobei das Verregnen über eine Sprinkleranlage mit feinen Düsen erfolgt.

9. Verfahren nach einem der Ansprüche 1 bis 8, wobei auf der Kulturfläche (16) Blumen angebaut werden, insbesondere Schwertliliengewächse (Iridaceae), Liliengewächse (Liliidae), besonders bevorzugt Freesien, Spargelgewächse (Asparagales), Hahnenfußgewächse (Ranunculaceae), besonders bevorzugt Ranunkeln, Anemonen, Anemonen-Schmuckblume (Callianthemum anemonoides) und Windröschen, Megaleranthis, Trollblumen (Trollius), Eranthis, Adonisröschen (Adonis), Eisenhut (Aconitum), Feldrittersporne (Consolida), Rittersporne (Delphinium), Christrose oder Nieswurz (Helleborus), Akelei (Aquilegia).

10. Verfahren nach einem der Ansprüche 1 bis 9, wobei auf den Anbauflächen (16) Gemüse und Salat angebaut wird, insbesondere Feldsalat.

11. Verwendung des Verfahrens nach irgendeinem der Ansprüche 1 bis 10 zur Bekämpfung von Pflanzenpathogenen und Pilzbefall in Gewächshauskulturen.

## Claims

1. Method for controlling the temperature in a greenhouse for growing, cuitivating and culture of frost-sensitive plants in the temperate zone where there are occasionally outside temperatures of minus 20 degrees Celsius at night on some days and a risk of ground frost for several months in the year comprising
(i) providing a well for lifting ground water of known temperature from the neutral depth zone;
(ii) measuring the general air and soil temperature of the greenhouse and of the outside temperature using temperature sensors (8, 10);
(iii) raining of groundwater from the neutral depth zone in the greenhouse when the outside temperature drops below a preset value;
(iv) controlling the amount of rained groundwater from the neutral depth zone in accordance with the general air and soil temperature of the greenhouse so that the plants cultivated in the greenhouse do not suffer from any frost damage;
(v) draining of rained groundwater and seepage or recycling into the ground of the groundwater used for controlling the temperature.

2. The method of claim 1, wherein about 100 percent humidity and fogging is produced in the greenhouse to achieve a wetting of the plants via the condensed water.

3. The method of claim 1 or 2, wherein a rain of groundwater from the neutral depth zone on the open area (18) is produced when the outside temperature drops below a predetermined range, or the general temperature of the greenhouse (4) drops below a predetermined value, or both .

4. Method according to any claim 1 to 3, wherein the general greenhouse temperature is determined by measuring the temperature values at several temperature measurement points.

5. Method according to any claim 1 to 4, wherein the area ratio of watered rain area (18) to plantation area (16) is 1 to 2 through 10, preferably 1 to 2 through6, most preferably 1 to 4

6. Method according to any claim 1 to 5, wherein the amount of pumped and rained groundwater from the neutral depth zone is automatically calculated and adjusted in accordance to the outside temperature and the general greenhouse temperature.

7. Method according to any claim 1 to 6, wherein the pumped groundwater from the depth zone is rain using a permanent sprinkler system (4) of the green house.

8. The method of claim 7, wherein the raining via a sprinkler system is achieved by fine nozzles.

9. Method according any claim 1 to 8, wherein flower plants are grown on the plantation area (16), especially of the iris family (*iridaceae*), *liliaceae* (*liliidae*)*,* more preferably freesias, asparagus plants (asparagales), buttercup flowers (*ranunculaceae*), more preferably ranunculus, anemone, decorative anemone flower (callianthemum anemonoides) and anemones, megaleranthis, globe flowers (*trollius*)*,* eranthis, adonis (*adonis*)*,* monkshood (*aconitum*)*,* field delphiniums (*consolida*)*,* delphinium (*delphinium*)*,* christmas rose or hellebore (*helleborus*)*,* columbine (*aquilegia*)*.*

10. Method according to any claim 1 to 9, wherein vegetables and lettuce, in particular lettuce, are grown on the plantation area (16).

11. Use of the method according to any one of claims 1 to 11 for a control of plant pathogens and fungi in greenhouse plantations.

## Revendications

1. Procédé de contrôle de la température dans une serre pour la plantation, la culture et l'élevage de plantes sensibles envers le gel dans des latitudes tempérées, où pendant la nuit et à certains jours des températures externes de moins 20 degrés Celsius apparaissent et où le risque de la gelée au sol existe pendant plusieurs mois de l'année, le procédé comprenant les étapes de
(i) mettre en place un puits pour extraire de l'eau souterraine d'une température connue de la zone de profondeur neutre ;
(ii) mesurer une température générale de l'air et du sol dans la serre et de la température externe à l'aide d'un senseur de température (8, 10) ;
(iii) arroser une surface dans la serre avec de l'eau souterraine de la zone de profondeur neutre dès que la température externe tombe en-dessous d'une valeur prédéterminée ;
(iv) régler la quantité de l'eau souterraine de la zone de profondeur neutre utilisée en raison de la température générale de l'air et du sol correspondante dans la serre, de façon que les plantes cultivées dans la serre ne souffrent pas de dégâts de gel ;
(v) drainer l'eau souterraine utilisée, et la laisser s'infiltrer ou la retourner dans le sol dans l'eau souterraine utilisée pour le contrôle de la température.

2. Procédé selon la revendication 1, dans lequel une humidité de l'air supérieure à 100 pour cent et une formation de brouillard est amenée dans la serre pour obtenir un arrosage des plantes avec de l'eau de condensation.

3. Procédé selon la revendication 1 ou 2, dans lequel l'étape d'arroser avec de l'eau souterraine de la zone de profondeur neutre se produit au-dessus d'une surface libre (18), si la température externe tombe en-dessous d'un niveau prédéterminé, ou la température générale dans la serre (4) tombe en-dessous d'un niveau prédéterminé, ou les deux en même temps.

4. Procédé selon l'une des revendications 1 à 3, dans lequel la température générale de la serre est calculée à partir des valeurs de plusieurs points de mesure de la température.

5. Procédé selon l'une des revendications 1 à 4, dans lequel le rapport de surface entre la surface d'arrosage (18) et la surface de culture (16) est 1 contre 2 à 10, de préférence 1 contre 2 à 6, de préférence particulière 1 contre 4.

6. Procédé selon l'une des revendications 1 à 5, dans lequel la quantité d'eau souterraine extraite de la zone de profondeur neutre et utilisée pour l'arrosage est automatiquement calculée et contrôlée en utilisant la température externe et la température générale de la serre.

7. Procédé selon l'une des revendications 1 à 6, dans lequel l'eau souterraine extraite de la zone de profondeur neutre est utilisée pour l'arrosage à travers une installation d'arrosage présente dans la serre (4).

8. Procédé selon la revendication 7, dans laquelle l'arrosage à travers une installation d'arrosage se produit avec des pulvérisateurs fins.

9. Procédé selon l'une des revendications 1 à 8, dans lequel des fleurs sont cultivées sur la surface de culture (16), en particulier les iridacées (iridaceae), les liliacées (liliidae), de préférence particulière les freesias, les asparagacées (asparagales), les renonculacées (ranunculaceae), de préférence particulière les renoncules, les anémones, callianthemum anemonoides et anémone, megaleranthis, les trolles (trollius), eranthis, adonis, aconitum, les pieds-d'alouettes (consolida), les dauphinelles (delphinium), la rose de noël ou helleborus, les ancolies (aquilegia).

10. Procédé selon l'une des revendications 1 à 9, dans lequel des légumes et de la salade sont cultivées sur les surfaces de plantation (16), en particulier la doucette.

11. Utilisation du procédé de l'une quelconque des revendications 1 à 10, dans la lutte contre les agents pathogènes des plantes et les maladies cryptogamiques dans des plantations de serre.
